(19) Europäisches Patentamt
European Patent Office
Office européen des brevets

(11) **EP 3 368 387 B1**

(12) **EUROPÄISCHE PATENTSCHRIFT**

(45) Veröffentlichungstag und Bekanntmachung des Hinweises auf die Patenterteilung:
**04.09.2019   Patentblatt 2019/36**

(21) Anmeldenummer: **16784173.3**

(22) Anmeldetag: **18.10.2016**

(51) Int Cl.:
**B60T 11/10** *(2006.01)*          **B60T 13/68** *(2006.01)*
**B60T 15/04** *(2006.01)*

(86) Internationale Anmeldenummer:
**PCT/EP2016/074982**

(87) Internationale Veröffentlichungsnummer:
**WO 2017/071991 (04.05.2017 Gazette 2017/18)**

(54) **ELEKTRO-PNEUMATISCHE FESTSTELLBREMSEINRICHTUNG MIT REDUNDANTER PNEUMATISCHER STEUERUNG**

ELECTRO-PNEUMATIC PARKING BRAKE CONTROL SYSTEM WITH REDUNDANT PNEUMATIC CONTROL

CONTROL DE FREIN DE VERROUILLAGE ÉLECTROPNEUMATIQUE AVEC CONTROL PNEUMATIQUE REDONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2015   DE 102015118290**

(43) Veröffentlichungstag der Anmeldung:
**05.09.2018   Patentblatt 2018/36**

(73) Patentinhaber: **KNORR-BREMSE Systeme für Nutzfahrzeuge GmbH
80809 München (DE)**

(72) Erfinder:
• HECKER, Falk
  71706 Markgröningen (DE)
• RÖTHER, Friedbert
  74389 Cleebronn (DE)
• HERGES, Michael
  80935 München (DE)
• HEEG, Sarah
  71701 Schwieberdingen (DE)

(56) Entgegenhaltungen:
EP-A1- 1 512 600          EP-A1- 1 571 061
WO-A1-2011/039558          DE-A1-102013 107 503

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine elektro-pneumatische Feststellbremseinrichtung eines Kraftfahrzeugs, mit einem elektrisch steuerbaren Feststellbremskreis, welcher wenigstens eine Feststellbremsbetätigungseinrichtung aufweist, die wenigstens ein mit einem elektrischen Feststellbremswertgeber zusammen wirkendes, vom Fahrer wenigstens in die Stellungen "Parken" und "Fahren" betätigbares Feststellbremsbetätigungsorgan aufweist, sowie eine elektronische Steuereinrichtung, in welche der Feststellbremswertgeber ein von einer Betätigung des Feststellbremsbetätigungsorgans abhängiges Feststellbremssignal einsteuert, wobei die elektronische Steuereinrichtung abhängig von dem Feststellbremssignal wenigstens ein Magnetventil einer Ventileinrichtung steuert, die mit wenigstens einem Federspeicherbremszylinder als Feststellbremse verbunden ist, und mit einem als Redundanz vorgesehenen pneumatisch steuerbaren Feststellbremskreis, der wenigstens ein vom Fahrer betätigbares pneumatisches Ventil aufweist, welches wenigstens ein pneumatisch steuerbares Ventil der Ventileinrichtung pneumatisch steuert, gemäß dem Oberbegriff von Anspruch 1.

Ein Zweck des als Redundanz vorgesehenen pneumatisch steuerbaren Feststellbremskreises besteht darin, dass bei einem Ausfall des vorrangigen elektrischen Feststellbremskreises beispielsweise aufgrund eines Ausfalls der Stromversorgung und/oder der elektronischen Steuereinrichtung weiterhin ein Zuspannen bzw. Lösen der Feststellbremse möglich ist.

Eine gattungsgemäße elektro-pneumatische Feststellbremseinrichtung ist beispielsweise aus EP 1 571 061 A1 bekannt. Dort ist in einer Betriebsbremsbetätigungseinrichtung der elektro-pneumatischen Betriebsbremse ein pneumatisches Bremsventil integriert, welches ein einer Betätigung eines Fußbremspedals der Betriebsbremsbetätigungseinrichtung proportionales Drucksignal erzeugt, welches auf einen Drucksteuereingang eines Invertierungsventils eines Feststellbremsmoduls gegeben wird, das ein diesem Drucksignal entgegen gesetztes Drucksignal einem pneumatischen Steuereingang eines Relaisventils des Feststellbremsmoduls zuführt, welches einen diesem Druck entsprechenden Druck an seinem Arbeitsausgang erzeugt, der mit den Federspeicherbremszylindern verbunden ist. Dadurch soll eine stufbare Abbremsung des in Fahrt befindlichen Fahrzeugs durch den pneumatischen Feststellbremssteuerkreis möglich sein. Aufgrund des pneumatischen Bremsventils und des Invertierungsventils ergibt sich jedoch einerseits ein relativ aufwändiger Aufbau. Zum andern stellt eine Betätigung des redundanten pneumatischen Feststellbremskreises mittels des Fußbremspedals der Betriebsbremseinrichtung bei einem Ausfall des vorrangigen elektrischen Feststellbremskreises eine für den Fahrer wenig intuitive Vorgehensweise dar.

Der vorliegenden Erfindung liegt demgegenüber die Aufgabe zugrunde, eine elektro-pneumatische Feststellbremseinrichtung der oben beschriebenen Art derart weiter zu entwickeln, dass ihre Bedienung zuverlässiger und intuitiver ist.

Diese Aufgabe wird erfindungsgemäß durch die Merkmale von Anspruch 1 gelöst.

Offenbarung der Erfindung

Gemäß der Erfindung ist vorgesehen, dass das wenigstens eine pneumatische Ventil derart angeordnet und ausgebildet ist, dass es vom Feststellbremsbetätigungsorgan mechanisch betätigbar ist und das wenigstens eine pneumatisch steuerbare Ventil der Ventileinrichtung abhängig von einer Betätigung des Feststellbremsbetätigungsorgans be- oder entlüftet.

Während das wenigstens eine pneumatische Ventil gemäß der oben genannten EP 1 571 061 A1 vom Betriebsbremsbetätigungsorgan der Betriebsbremse, d.h. vom Fußbremspedal betätigt wird, was zur Folge hat, dass der Fahrer die Feststellbremseinrichtung bei ausgefallenem elektrischen Feststellbremskreis nicht mehr über das Feststellbremsbetätigungsorgan bedienen kann, wird das wenigstens eine pneumatische Ventil der Ventileinrichtung vom Feststellbremsbetätigungsorgan der Feststellbremseinrichtung betätigt, mit welchem auch der elektrische Feststellbremskreis betätigt wird.

Dadurch wird die Bedienung der elektro-pneumatischen Feststellbremseinrichtung zuverlässiger und intuitiver, weil auch bei ausgefallenem elektrischem Feststellbremskreis der Fahrer den verbleibenden redundanten pneumatischen Feststellbremskreis noch mit demselben Betätigungsorgan, nämlich mit dem Feststellbremsbetätigungsorgan betätigen kann. Ein Ausfall des elektrischen Feststellbremskreises wirkt sich demnach nicht auf die Bedienung der Feststellbremseinrichtung aus.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform ist das wenigstens eine pneumatische Ventil in die Feststellbremsbetätigungseinrichtung baulich integriert. Dies kann beispielsweise dadurch realisiert sein, dass das wenigstens eine pneumatische Ventil in ein Gehäuse der Feststellbremsbetätigungseinrichtung integriert ist.

Die Feststellbremsbetätigungseinrichtung ist regelmäßig in einer Kabine des Fahrzeugs angeordnet und weist als Feststellbremsbetätigungsorgan beispielsweise rotatorisch und/oder translatorisch betätigbare Elemente wie einen schwenkbaren Feststellbremshebel, einen Kippschalter oder ein drück- und ziehbares Betätigungsorgan auf. Das Feststellbremsbetätigungsorgan ist zudem außer in die Stellungen "Parken" und "Fahren" bevorzugt in wenigstens eine weitere Stellung stellbar, wie z.B. "Test", in welcher die Feststellbremse des Zugfahrzeugs zugespannt und die Bremsen eines an das zugfahrzeug angehängten Anhängers gelöst werden, um zu testen, ob das eingebremste Zugfahrzeug den ungebremsten Anhänger im Stillstand halten kann.

Bevorzugt ist das wenigstens eine pneumatisch steuerbare Ventil der Ventileinrichtung ein Relaisventil, von welchem ein pneumatischer Steuereingang einerseits mit einer elektropneumatischen, von der elektronischen Steuereinrichtung gesteuerten Einlass-/Auslassventilkombination und andererseits mit dem pneumatischen Ventil verbunden ist, und von welchem ein Arbeitsausgang mit dem wenigstens einen Federspeicherbremszylinder verbunden ist. Der pneumatische Steuereingang des Relaisventils kann daher einerseits im Rahmen des elektrischen Feststellbremskreises von der von der elektronischen Steuereinrichtung gesteuerten Einlass-/Auslassventilkombination und/oder andererseits im Rahmen des redundanten pneumatischen Feststellbremskreises durch das pneumatische Ventil gesteuert werden.

Besonders bevorzugt ist das wenigstens eine pneumatische Ventil ein 2/2-Wegeventil mit einer Sperrstellung und einer Durchlassstellung ist, wobei es in die Sperrstellung federbelastet ist und in der Durchlassstellung ein Eingang mit einem Ausgang verbunden und in der Sperrstellung diese Verbindung gesperrt ist. Damit ergibt sich ein wesentlich einfacherer Aufbau der Feststellbremseinrichtung verglichen mit EP 1 571 061 A1, bei welcher ein proportionales Bremsventil in Verbindung mit einem Invertierungsventil eingesetzt wird.

Gemäß einer Weiterbildung ist der Ausgang des 2/2-Wegeventil mit einem pneumatischen Steuereingang des pneumatisch steuerbaren Ventils der Ventileinrichtung und der Eingang des 2/2-Wegeventils entweder mit einer Entlüftung oder mit einem Druckluftvorrat verbunden ist.

Wenn der Ausgang des 2/2-Wegeventil mit dem pneumatischen Steuereingang eines Relaisventils der Ventileinrichtung und der Eingang des 2/2-Wegeventils mit einer Entlüftung verbunden ist, so kann die Feststellbremse mit Hilfe des pneumatischen Feststellbremskreises "notzugespannt" werden, weil dann der pneumatische Steuereingang und damit auch der Arbeitsausgang des Relaisventils der Ventileinrichtung über das in Durchlassstellung geschaltete 2/2-Wegeventil entlüftet werden kann.

Wenn der Ausgang des 2/2-Wegeventil mit dem pneumatischen Steuereingang des Relaisventils der Ventileinrichtung und der Eingang des 2/2-Wegeventils hingegen mit einem Druckluftvorrat verbunden ist, so kann die Feststellbremse mit Hilfe des pneumatischen Feststellbremskreises "notgelöst" werden, weil dann der pneumatische Steuereingang und damit auch der Arbeitsausgang des Relaisventils der Ventileinrichtung über das in Durchlassstellung geschaltete 2/2-Wegeventil betlüftet werden kann.

Besonders bevorzugt ist eine mechanische Kopplung zwischen dem wenigstens einen pneumatischen Ventil und dem Feststellbremsbetätigungsorgan derart ausgebildet, dass lediglich in der (End-)Stellung "Parken" des Feststellbremsbetätigungsorgans das wenigstens eine pneumatisch steuerbare Ventil der Ventileinrichtung zum redundanten Zuspannen des wenigstens einen Federspeicherbremszylinders gesteuert wird.

Alternativ kann eine mechanische Kopplung zwischen dem wenigstens einen pneumatischen Ventil und dem Feststellbremsbetätigungsorgan derart ausgebildet sein, dass lediglich in der (End-)Stellung "Fahren" des Feststellbremsbetätigungsorgans das wenigstens eine pneumatisch steuerbare Ventil der Ventileinrichtung zum redundanten Lösen des wenigstens einen Federspeicherbremszylinders gesteuert wird.

Beide Alternativen schließen daher ein Umschalten des pneumatischen Ventils in einer Zwischenstellung des Feststellbremsbetätigungsorgans zwischen den Endstellungen "Parken" und "Fahren" aus, z.B. in Teilbremsstellungen. Dies ist insofern vorteilhaft, weil dann als pneumatischen Ventil bevorzugt ein einfaches und kostengünstiges 2/2-Wegeventil mit lediglich zwei Schaltstellungen Sperrstellung und Durchlassstellung verwendet werden kann, wobei die Durchlassstellung des 2/2-Wegeventils entweder in der Endstellung "Parken" oder in der Endstellung "Fahren" des Feststellbremsbetätigungsorgans eingenommen wird. Ein weiterer Vorteil dieser Maßnahme besteht darin, dass sich ein für den Fahrer spürbarer Knick in der Kraftkennlinie des Feststellbremsbetätigungsorgans beim Erreichen der Stellung "Parken" oder "Fahren" ergibt, so dass hierfür keine zusätzlichen Federelemente notwendig sind.

Gemäß einer Weiterbildung ist das wenigstens eine pneumatische Ventil ein Sitzventil oder ein Schieberventil. Der Vorteil des Schieberventils gegenüber einem Sitzventil besteht darin, dass seine Funktion bzw. Schaltcharakteristik weniger druckabhängig ist.

Die Erfindung betrifft auch ein Fahrzeug, insbesondere ein zum Ziehen eines Anhängers ausgebildetes Zugfahrzeug, welches eine oben beschriebene elektro-pneumatische Feststellbremseinrichtung aufweist.

Zeichnung

Nachstehend ist ein Ausführungsbeispiel der Erfindung in der Zeichnung dargestellt und in der nachfolgenden Beschreibung näher erläutert. In der Zeichnung zeigt

Fig.1    einen Auszug aus einem schematischen Schaltplan einer bevorzugten Ausführungsform einer elektro-pneumatischen Feststellbremseinrichtung gemäß der Erfindung;

Fig.2A    eine schematische Darstellung einer Feststellbremsbetätigungseinrichtung der elektro-pneumatischen Feststellbremseinrichtung von Fig.1 mit einem Feststellbremsbetätigungsorgan in der Stellung "Fahren";

Fig.2B    die Feststellbremsbetätigungseinrichtung von Fig.2A mit dem Feststellbremsbetätigungsorgan in einer Stellung "Teilbremsen";

FIG.2C    die Feststellbremsbetätigungseinrichtung von Fig.2A mit dem Feststellbremsbetätigungsorgan in der Stellung "Parken".

Beschreibung des Ausführungsbeispiels

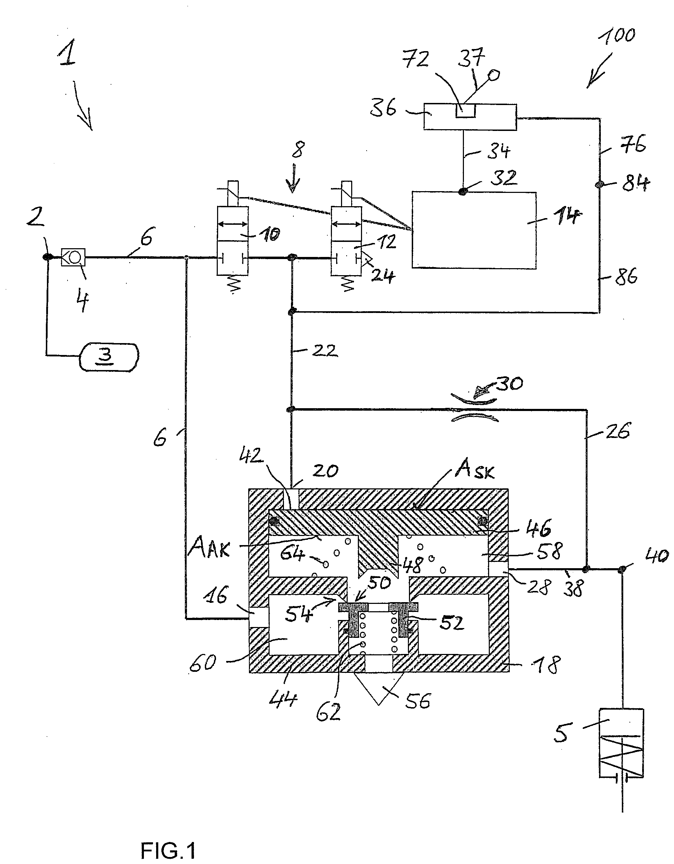

**Fig.1** zeigt ein schematisches Schaltbild einer bevorzugten Ausführungsform einer elektro-pneumatischen Feststellbremseinrichtung 100 gemäß der Erfindung. Die elektro-pneumatische Feststellbremseinrichtung 100 stellt die Feststellbremskomponente einer elektropneumatischen Bremseinrichtung einer Zugfahrzeug-Anhängerkombination dar und ist auf dem Zugfahrzeug angeordnet. Neben der Feststellbremseinrichtung 100 stellt eine hier nicht gezeigte elektropneumatische Betriebsbremseinrichtung, z.B. eine EBS die Betriebsbremskomponente der elektropneumatischen Bremseinrichtung dar.

Eine elektro-pneumatische Feststellbremssteuereinrichtung 1 der Feststellbremseinrichtung 100, hier bevorzugt als Feststellbremsmodul oder Baueinheit ausgeführt, hat einen Vorratsanschluss 2, der über ein Rückschlagventil 4 abgesichert ist. Von dem Vorratsanschluss 2 erstreckt sich eine Vorratsleitung 6 einerseits zu einer Magnetventileinrichtung 8 mit einem ersten 2/2-Wegemagnetventil 10 als Einlassventil und einem zweiten 2/2-Wegemagnetventil 12 als Auslassventil. Das erste 2/2-Wegemagnetventil 10 befindet sich wie das zweite 2/2-Wegemagnetventil 12 unbestromt in der gezeigten Sperrstellung, während beide Ventile 10, 12 bestromt in die Durchlassstellung umschalten und von einer elektronischen Steuereinrichtung 14 gesteuert werden. Der Vorratsanschluss 2 ist an einen Druckluftvorrat 3, bevorzugt einen eigenen Druckluftvorrat für die Feststellbremseinrichtung 100 angeschlossen.

Weiterhin ist auch ein Vorratseingang 16 eines Relaisventils 18 über die Vorratsleitung 6 an den Vorratsanschluss 2 angeschlossen. Ein pneumatischer Steuereingang 20 des Relaisventils 18 ist über eine Steuerleitung 22 mit der Kombination aus Einlassventil 10 (erstes 2/2-Wegemagnetventil) und Auslassventil 12 (zweites 2/2-Wegemagnetventil) verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen, während diese Verbindung in der bestromten Durchlassstellung geschaltet ist. In analoger Weise ist in der stromlosen Sperrstellung des ersten 2/2-Wegemagnetventils 10 die Verbindung zwischen der Steuerleitung 22 bzw. dem Steuereingang 20 des Relaisventils 18 und dem Vorratsanschluss 2 unterbrochen, während diese Verbindung in der bestromten Durchlassstellung geschaltet ist.

Darüber hinaus ist in eine hier optionale Rückkopplungsleitung 26 zwischen einem Arbeitsausgang 28 des Relaisventils 18 und dem Steuereingang 20 des Relaisventils 18 ein Drosselelement 30 geschaltet, durch welches der Strömungsquerschnitt der Rückkopplungsleitung 26 verengt und mittels der Strömungsquerschnittsverengung der Luftmassenstrom zwischen dem Arbeitsausgang 28 und dem pneumatischen Steuereingang 20 des Relaisventils 18 begrenzt bzw. gedrosselt wird.

Die beiden 2/2-Wegemagnetventile 10, 12 sind bevorzugt in ihre stromlose Stellung federbelastet vorgespannt und werden durch Bestromung mittels der Steuereinrichtung 14 umgeschaltet. Der Arbeitsausgang 28 des Relaisventils 18 ist mittels einer Arbeitsleitung 38 mit einem Anschluss 40 verbunden. An diesen Anschluss 40 sind bevorzugt zwei Federspeicherbremszylinder 5 an der Hinterachse angeschlossen, von welchen nur einer gezeigt ist.

Die Steuerleitung 22 bzw. der Steuereingang 20 des Relaisventils 18 wird je nach Schaltstellung des ersten 2/2-Wegemagnetventils 10 und des zweiten 2/2-Wegemagnetventil 12 (Einlass-/Auslassmagnetventilkombination) be- oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für die Federspeicherbremszylinder 5 nach sich zieht.

Das Relaisventil 18 ist in weitgehend bekannter Weise aufgebaut und beinhaltet eine über den Steuereingang 20 an die Steuerleitung 22 angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange ausgebildeten Ventilkörper 48, der mit einem Auslasssitz 50 an einer ebenfalls im Gehäuse 44 beweglich aufgenommenen Manschette 52 ein Auslassventil eines Doppelsitzventils ausbildet. Weiterhin beinhaltet das Relaisventil 18 einen am Gehäuse 44 ausgebildeten Einlasssitz 54, gegen welchen die Manschette 52 vorgespannt und mit diesem zusammen ein Einlassventil des Doppelsitzventils bildet. Die Manschette 52 weist außerdem eine mittige Durchgangsbohrung auf, die bei von der Manschette 52 abgehobenem Relaiskolben 46 eine Entlüftung 56 mit einer Arbeitskammer 58 verbindet, die mit dem Arbeitsausgang 28 verbunden ist, um diesen zu entlüften. Andererseits ist eine mit dem Vorratseingang 16 in Verbindung stehende Vorratskammer 60 bei von dem Einlasssitz 54 abgehobener Manschette 52 mit der Arbeitskammer 58 verbunden, um den Arbeitsausgang 28 zu belüften. Die Stellung des Relaiskolbens 46, der mit seinem Ventilkörper 48 die Manschette 52 nach unten drücken kann, um ihn vom Einlasssitz 54 abzuheben wird demnach durch den Druck am Steuereingang 20 bzw. in der Steuerkammer 42 bestimmt. Schließlich wird die Manschette 52 mittels einer Manschettenfeder 62 gegen den Einlasssitz 54 gedrängt. Außerdem drängt eine Relaiskolbenfeder 64 mit der Kraft $F_F$ den Relaiskolben 46 vom Auslasssitz 50 weg in Richtung Steuerkammer 42.

Die Schaltzustände der beiden 2/2-Wegemagnetventile 10, 12 werden durch die Steuereinrichtung 14 bestimmt, insbesondere in Abhängigkeit von den an einem mit der Steuereinrichtung 14 verbundenen Feststellbremssignalanschluss 32 der Feststellbremssteuereinrichtung 1 anstehenden Feststellbremssignalen. Hierzu steht eine Feststellbremsbetätigungseinrichtung 36 über eine Signalleitung 34 mit dem Feststellbremssignalanschluss 32 in Verbindung und ist ausgebildet, dass sie abhängig von einer Betätigung eines Feststellbremsbetätigungsorgans 37 der Feststellbremsbetätigungseinrichtung 36 Feststellbremssignale in den Feststellbremssignalanschluss 32 aussteuert, welche die weiter unter beschriebene Betriebszustände repräsentieren. Im Einzelnen wirkt das Feststellbremsbetätigungsorgan 37 hierzu mit einem elektrischen Feststellbremswertgeber 39 der Feststellbremsbetätigungseinrichtung 36 zusammen.

Die Steuereinrichtung 14 kann über den Feststellbremssignalanschluss 32 oder auch über einen weiteren, hier nicht gezeigten Signalanschluss auch mit einem in den Figuren nicht dargestellten Fahrzeugdatenbus verbunden sein, über den digitale Daten von anderen Steuereinrichtungen empfangen und an diese gesendet werden können. Anstatt durch die oder zusätzlich zu der durch den Fahrer über das Feststellbremsbetätigungsorgan 37 manuell bedienbaren Feststellbremsbetätigungseinrichtung 36 können Feststellbremssignale auch von einer weiteren Steuereinrichtung beispielsweise über einen Fahrzeugdatenbus in die Steuereinrichtung 14 eingesteuert werden, beispielsweise von einem Fahrerassistenzsystem wie beispielsweise von einem Anfahrhilfesystem an Steigungen. Anhand von über einen solchen Fahrzeugdatenbus empfangenen Signalen können Feststellbremssignale dann von der Steuereinrichtung 14 selbst generiert werden. Beispielsweise kann die Feststellbremse automatisch zugespannt werden, wenn das Fahrzeug zum Stillstand gekommen ist, oder auch automatisch gelöst werden, wenn erkannt wird, dass das Fahrzeug losfahren soll.

Im Einzelnen beaufschlagt der Druck $p_{SK}$ in der Steuerkammer 42 die dieser zugewandte Fläche $A_{SK}$ des Relaiskolbens 46, der Arbeitskammerdruck $p_{AK}$ wirkt auf die dieser zugewandten Fläche $A_{AK}$. Die der Steuerkammer 42 zugewandte Fläche $A_{SK}$ des Relaiskolbens 46 ist größer als die der Arbeitskammer 58 zugewandte Fläche $A_{AK}$.

Auf den Relaiskolben 46 wirken also folgende Kräfte:

Aus Richtung Steuerkammer:

$$F_{st} = p_{SK} A_{SK}$$

Aus Richtung Arbeitskammer:

$$F_{AK} = F_F + p_{AK} A_{AK}$$

Wird die Manschette 52 nach unten bewegt, so muss zusätzlich die Kraft $F_{F2}$ der Manschettenfeder 62 überwunden werden. Schließlich müssen noch die Reibkräfte $F_{Reibung}$ der Dichtungen und Führungen von Relaiskolben 46 und Manschette 52 überwunden werden, wenn der Relaiskolben 46 bewegt werden soll.

Die elektro-pneumatische Feststellbremssteuereinrichtung 1 beinhaltet daher die Magnetventileinrichtung 8 als Einlass-/Auslass-Magnetventilkombination, das Relaisventil 18, das Drosselelement 30, die Steuereinrichtung 14, die internen Druckverbindungen 6, 22 und 26 sowie als Anschlüsse wenigstens die Anschlüsse 2, 32 und 40. Wenigstens diese Komponenten der elektro-pneumatischen Feststellbremssteuereinrichtung 1 sind dann bevorzugt in einer Baueinheit, dem Feststellbremsmodul mit eigenem Gehäuse untergebracht.

Vor diesem Hintergrund ist die Funktionsweise der elektro-pneumatischen Feststellbremseinrichtung 1 wie folgt: In dem in Fig.1 gezeigten Grundzustand der elektropneumatischen Feststellbremssteuereinrichtung 1 sind sowohl das erste 2/2-Wegemagnetventil 10 als auch das zweite 2/2-Wegemagnetventil 12 unbestromt, so dass über das Drosselelement 30 der Steuereingang 20 stets mit dem Arbeitsausgang 28 des Relaisventils 18 verbunden ist. Damit ist die Rückkopplung stabil und es kann keine Druckluft vom Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für die Federspeicherbremszylinder 5 und dadurch auch deren Zuspann- bzw. Lösestellung konstant gehalten.

Soll nun auf ein entsprechendes Feststellbremssignal hin der Druck an dem Anschluss 40 für die Federspeicherbremszylinder 5 erhöht werden, beispielsweise im Betriebszustand "Hilfsbremse", so wird durch Bestromung des ersten 2/2-Wegemagnetventils 10 dieses in Durchgangsstellung geschaltet und dadurch der Druck in der Steuerkammer 42 des Relaisventils 18 erhöht. Dies erfolgt insbesondere durch Pulsen des ersten 2/2-Wegemagnetventils 10.

Wenn dann gilt:

$$p_{SK} A_{SK} > F_F + F_{F2} + p_{AK} A_{AK} + F_{Reibung},$$

so bewegt sich der Relaiskolben 46 nach unten, öffnet den Einlasssitz 54 des Doppelsitzventils und lässt Vorratsdruck in die Arbeitskammer 58 einströmen. Wenn dann gilt:

$$p_{SK} A_{SK} + F_{Reibung} = F_F + p_{AK} A_{AK}$$

bewegt sich der Relaiskolben 46 zurück bis in eine Neutralstellung, in welcher Einlasssitz 54 und Auslasssitz 50 des Doppelsitzventils geschlossen sind.

Soll demgegenüber auf ein entsprechendes Feststellbremssignal hin ein geringerer Druck an dem Anschluss 40 für die Federspeicherbremszylinder 5 eingeregelt werden, beispielsweise im Betriebszustand "Hilfsbremse", so wird vorzugsweise durch Pulsen des zweiten 2/2-Wegemagnetventils 12 der Steuerdruck in der Steuerkammer 42 abgesenkt, bis gilt:

$$p_{SK} A_{SK} + F_{Reibung} < F_F + p_{AK} A_{AK}.$$

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, worauf der Relaiskolben 46 wieder in Neutralstellung übergeht.

Da während der oben beschriebenen Drucksteuerung bzw. Druckregelung in der Steuerkammer 42 und in der Arbeitskammer 58 im Allgemeinen nicht die gleichen Drücke herrschen und über das Drosselelement 30 immer ein gewisse Luftmenge in Richtung des niedrigeren Drucks strömt, wird vorzugsweise daraus resultierende Anteil der Druckänderung in der Steuerkammer 42 durch entsprechende gepulste Steuerung des ersten 2/2-Wegemagnetventils 10 bzw. des zweiten 2/2-Wegemagnetventils 12 ausgeglichen. Dies gilt sowohl für Drucksteigern, Druckverringern als auch für Druckhalten, wenn nicht genau Vorratsdruck oder Atmosphärendruck am Anschluss 40 für den wenigstens einen Federspeicherbremszylinder herrschen sollen.

Zum Herstellen des Betriebszustands "Fahren" auf ein entsprechendes Feststellbremssignal am Feststellbremssignalanschluss 32 hin wird das erste 2/2-Wegemagnetventil 10 über längere Zeit bestromt. Dadurch wird die Steuerkammer 42 belüftet, auch wenn zunächst ein geringer Teil der vom ersten 2/2-Wegemagnetventil 10 zur Steuerkammer geleiteten Luft durch das Drosselelement (30) in die Arbeitskammer abströmt.

Wenn gilt:

$$p_{SK} A_{SK} > F_F + F_{F2} + F_{Reibung}$$

steigt auch der Druck in der Arbeitskammer 58, solange gilt:

$$p_{SK} A_{SK} > F_F + F_{F2} + p_{AK} A_{AK}$$

Da die Fläche $A_{SK}$ größer als die Fläche $A_{AK}$ ist, steigt in der Arbeitskammer 58 der Druck schneller als in der Steuerkammer 42 bis er ihn schließlich überschreitet. Dann strömt über die Rückkopplungsleitung 26 und das Drosselelement 30 Luft von der Arbeitskammer 58 in die Steuerkammer 42 über, so dass sich der Prozess selbst verstärkt.

Dadurch wird der Relaiskolben 46 stabil in seine untere, zur Arbeitskammer 58 weisende Endposition gedrängt, sodass er permanent den Einlasssitz 54 des Doppelsitzventils öffnet und die Arbeitskammer 58 mit dem Vorratsanschluss 2 verbindet.

Da nun die Steuerkammer 42 über das Drosselelement 30, die Arbeitskammer 58 und den Einlasssitz 54 permanent mit Vorratsdruck versorgt wird, kann auch das erste 2/2-Wegemagnetventil 10 entstromt werden, um es in seine Sperrstellung zu schalten. Es gilt dann:

$$p_{SK} = p_{AK} = p_{Verorgung}$$

Im stabilen Betriebszustand "Fahren" bleibt der Relaiskolben 46 in der Belüftungsstellung und es gilt:

$$p_{Versorgung}A_{SK} + F_{Reibung} > F_F + F_{F2} + p_{Versorgung}A_{AK}$$

Sinkt in der Stellung "Fahren" der Vorratsdruck $p_{Versorgung}$ unter einen bestimmten Schwellwert ab, z.B. weil bei ausgeschaltetem Motor geringe Undichtigkeiten hinter Anschluss 40 nicht mehr nachgefördert werden, so überwiegt irgendwann die von der Relaiskolbenfeder 64 auf den Relaiskolben 46 wirkende Kraft und der Einlasssitz 54 wird geschlossen, der Auslasssitz 50 geöffnet und der Druck in der Arbeitskammer 58 entlüftet. Da das Drosselelement 30 die Steuerkammer 42 mit der Arbeitskammer 58 verbindet wird nun auch die Steuerkammer 42 entlüftet, wodurch die Federkräfte der Relaiskolbenfeder 64 nun noch mehr überwiegen. Die Feststellbremse geht dann automatisch in die stabile Parkstellung.

Zum Herstellen des Betriebszustands "Parken" wird das zweite 2/2-Wegemagnetventil 12 über eine gewisse Zeitdauer bestromt. Dadurch wird die Steuerkammer 42 entlüftet, bis dort Atmosphärendruck herrscht.

Wenn gilt:

$$p_{SK}A_{SK} + F_{Reibung} < F_F + p_{AK}A_{AK}$$

bewegt sich der Relaiskolben 46 in Richtung Steuerkammer 42 und entlüftet die Arbeitskammer 58 über den Auslasssitz 50 des Doppelsitzventils.

Da die Fläche $A_{SK}$ deutlich größer ist als die Fläche $A_{AK}$, ist der Druck in der Arbeitskammer 58 zunächst noch höher als der in der Steuerkammer 42, weshalb Luft zunächst noch von der Arbeitskammer 58 über das Drosselelement 30 in Richtung Steuerkammer 42 strömt. Da jedoch der Öffnungsströmungsquerschnitt des zweiten 2/2-Wegemagnetventils 12 größer ist als der Strömungsquerschnitt des Drosselelements 30 an der Drosselstelle sinkt der Druck in der Steuerkammer 42 dennoch.

Da wegen der Flächenverhältnisse der Druck $p_{AK}$ in der Arbeitskammer 58 schneller sinkt als der Druck $p_{SK}$ in der Steuerkammer wird Ersterer wegen der Relaiskolbenfeder 64 irgendwann kleiner als Letzterer. Nun dreht sich die Strömungsrichtung durch das Drosselelement 30 um und es strömt Luft von der Steuerkammer 42 zur Arbeitskammer 58, so dass sich der Prozess selbst verstärkt, bis überall Atmosphärendruck herrscht. Die den Relaiskolben 46 belastende Relaiskolbenfeder 64 sorgt dafür, dass er sich bis in seine obere Endstellung bewegt und dort verharrt, wodurch der Auslasssitz 50 permanent vollständig geöffnet ist. Da nun die Steuerkammer 42 über das Drosselelement 30, die Arbeitskammer 58 und den geöffneten Auslasssitz 50 permanent mit Atmosphäre verbunden ist, kann das zweite 2/2-Wegemagnetventil 12 entstromt und damit in seine Sperrstellung gebracht werden.

Die elektrische Feststellbremsbetätigungseinrichtung 36 bildet zusammen mit der Feststellbremssteuereinrichtung 1 einen elektrischen Feststellbremskreis aus, mit welchem die Feststellbremse, d.h. die Federspeicherbremszylinder 5 durch Betätigung des Feststellbremsbetätigungsorgans 37 auf elektrischem Wege zugespannt bzw. gelöst werden.

Wenn dieser elektrische Feststellbremskreis ausfällt, sei es bei durch Ausfall oder Abschalten (Zündung "Aus") deaktivierter elektrischer Energieversorgung bzw. bei einem Ausfall der elektronischen Steuereinrichtung 14 so ist die Feststellbremse weiterhin noch noch zuspannbar bzw. lösbar, weil die elektro-pneumatische Feststellbremseinrichtung 1 noch einen redundanten pneumatischen Feststellbremskreis aufweist.

Der pneumatische Feststellbremskreis weist ein über das Feststellbremsbetätigungsorgan 37 manuell betätigbares, pneumatisches Ventil 72 auf, über welches der Steuereingang 20 des Relaisventils 18 gesteuert werden kann, um ihn zum Lösen der Feststellbremse zu belüften bzw. zum Zuspannen der Feststellbremse zu entlüften. Bevorzugt wird im Folgenden der Weg beschrieben, bei dem die Feststellbremse vom pneumatischen Feststellbremskreis zugespannt werden kann.

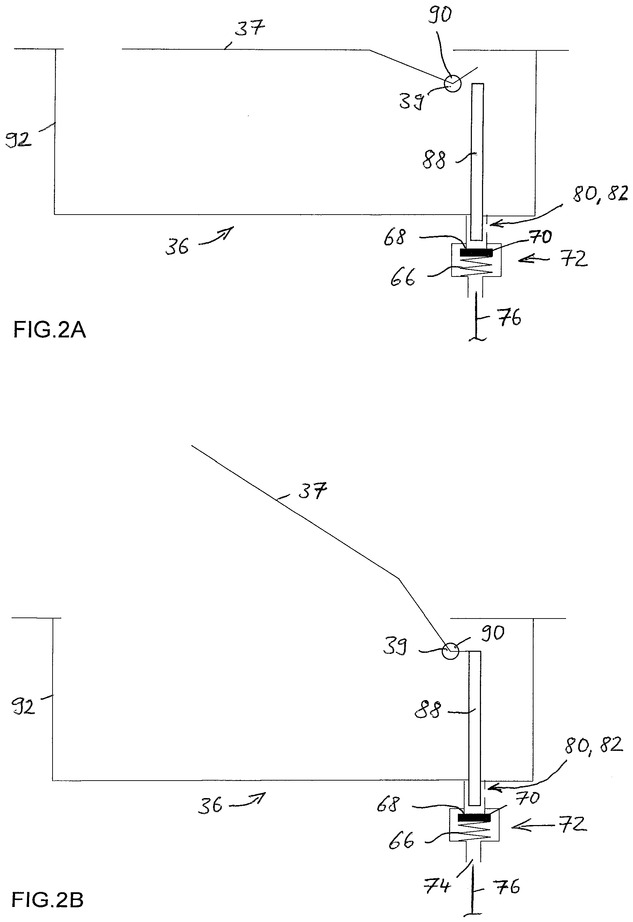

Wie die **Figuren 2A** bis **2C** zeigen, ist das pneumatische Ventil 72 bevorzugt ein 2/2-Wegeventil mit einer Durchlassstellung und einer Sperrstellung, wobei es in die Sperrstellung beispielsweise federbelastet ist. Bevorzugt ist das pneumatische Ventil 72 hier ein Sitzventil mit einem von wenigstens einem Federelement 66 gegen einen Ventilsitz 68 gedrängten Ventilglied 70, alternativ kann aber auch ein Schieberventil vorgesehen sein.

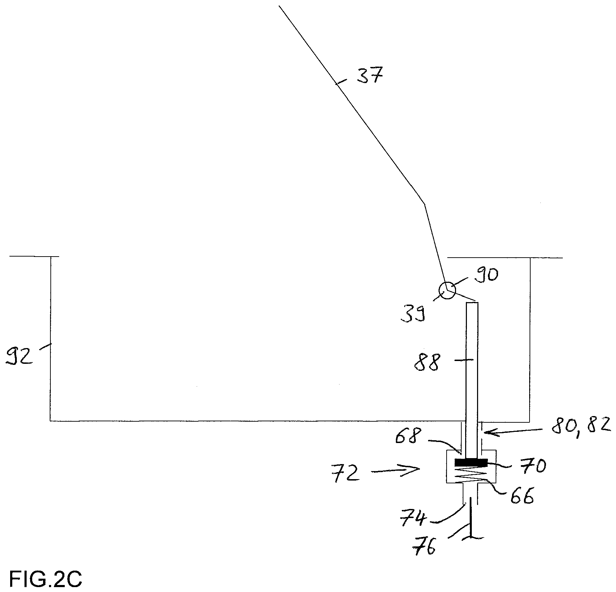

In der Durchlassstellung **(Fig.2C),** in welcher das Ventilglied 70 vom Ventilsitz 68 abgehoben ist, verbindet das pneumatische Ventil 72 eine an seinen Ausgang 74 angeschlossene Backup-Leitung 76 mit seinem Eingang 80, der hier mit einer Entlüftung 82 verbunden ist. Diese Backup-Leitung 76 ist wiederum an einen Backup-Anschluss 84 der Feststellbremssteuereinrichtung 1 angeschlossen, der wiederum über eine interne Druckverbindung 86 der Feststellbremssteuereinrichtung 1 mit dem pneumatischen Steuereingang 20 des Relaisventils 18 verbunden ist. Daher verbindet das pneumatische Ventil 72 den pneumatischen Steuereingang 20 des Relaisventils 18 in der Durchlassstellung mit der Entlüftung 82 und sperrt in der Sperrstellung diese Verbindung.

Über eine mechanische Kopplung 88, hier z.B. über einen Stößel wird das pneumatische Ventil 72 von dem Feststellbremsbetätigungsorgan 27 mechanisch betätigt. Das Feststellbremsbetätigungsorgan 37 ist hier beispielsweise ein um eine Schwenkachse 90 schwenkbarer Hebel und der Feststellbremswertgeber 39 hier beispielsweise ein an der Schwenkachse 90 angeordneter Drehwinkelsensor, der dann ein einer Drehbetätigung des Feststellbremsbetätigungsorgan 37 entsprechendes Feststellbremsbetätigungssignal über die Signalleitung 34 und den Feststellbremssignalanschluss 32 in die elektronische Steuereinrichtung 14 einsteuert. Anstatt für eine rotatorische Betätigung können Feststellbremsbetätigungsorgan 37 und Feststellbremswertgeber 39 auch für eine rein translatorische oder für eine kombinierte rotatorische/translatorische Betätigung ausgebildet und angeordnet sein. Anstatt eines schwenkbaren Hebels könnte beispielsweise auch ein Kippschalter oder ein Druck/Zugschalter als Feststellbremsbetätigungsorgan 37 vorgesehen sein.

Das Feststellbremsbetätigungsorgan 37 weist gemäß **Fig.2A** eine hier beispielsweise nicht verschwenkte oder nicht betätigte Endstellung "Fahren" sowie gemäß **Fig.2C** eine hier beispielsweise maximal verschwenkte Endstellung "Parken" auf. Eine in **Fig.2B** gezeigte Zwischenstellung zwischen den beiden Endstellungen repräsentiert dabei beispielsweise eine von vielen stufenlosen Teilbremsstellungen, in welcher die Feststellbremse beispielsweise zum dosierten Hilfsbremsen während der Fahrt nur teilweise zugespannt wird. Dabei sind eine Vielzahl solcher Zwischenstellungen je nach Schwenkstellung des Feststellbremsbetätigungsorgans 37 vorhanden, wobei mit steigendem Schwenkwinkel ausgehend von der Endstellung "Fahren" eine umso größere Feststellbremskraft erzeugt wird. Die Endstellung "Fahren" entspricht hier beispielsweise einer im Wesentlichen horizontalen Stellung des Feststellbremsbetätigungsorgans 37, während dieses in der Endstellung "Parken" eine eher vertikale Ausrichtung hat.

Die mechanische Kopplung 88 und das pneumatische Ventil 72 sind dabei so ausgebildet und angeordnet, dass das Feststellbremsbetätigungsorgan 37 das federbelastet in seine Sperrstellung geschaltete pneumatische Ventil 72 erst dann in dessen Durchlassstellung schalten kann, wenn das Feststellbremsbetätigungsorgan 37 die in Fig.2C gezeigte Endstellung "Parken" geschwenkt worden ist. Erst dann kommt die mechanischen Kopplung 88 mit dem Ventilglied 70 in Kontakt, um dieses hier beispielsweise translatorisch zu betätigen, was dann eine translatorische Betätigung des Ventilglieds 70 zur Folge hat, wodurch es vom Ventilsitz 68 abhebt. Die beschriebene Art der mechanischen Kopplung 88 zwischen dem Feststellbremsbetätigungsorgan 37 und dem pneumatischen Ventil 72 bzw. dessen Ventilglied 70 ist rein beispielhaft. Zur Realisierung einer Betätigung des pneumatischen Ventils 72 in Durchlassstellung, welche lediglich in der Endstellung "Parken" zustande kommt aber in den anderen Stellungen "Fahren" bzw. "Teilbremsen" nicht, sind zahlreiche Lösungen für den Fachmann denk- und ausführbar.

Daher befindet sich die mechanische Kopplung 88 in den Stellungen "Fahren" (Fig.2A) sowie in den Zwischenstellungen (Fig.2B) außer Eingriff mit dem pneumatischen Ventil 72 bzw. mit dessen Ventilglied 70 und kann dieses dann nicht von der Sperrstellung in die Durchlassstellung umschalten.

Das pneumatische Ventil 72 ist bevorzugt in die Feststellbremsbetätigungseinrichtung 36 bzw. in deren Gehäuse 92 integriert. Der redundante pneumatische Feststellbremskreis beinhaltet dann wenigstens das Feststellbremsbetätigungsorgan 37, die mechanische Kopplung 88, die Backup-Leitung 76, den Backup-Anschluss 84 sowie die interne Druckverbindung 86. Weil beide Feststellbremskreise die Federspeicherbremszylinder 5, das Feststellbremsbetätigungsorgan 37 sowie das Relaisventil 18 beinhalten, sind Überschneidungen zwischen dem elektrischen und dem redundanten pneumatischen Feststellbremskreis vorhanden.

Im Zustand "Fahren" sowie in den Teilbremszuständen des Feststellbremsbetätigungsorgans 37 gemäß Fig. 2A und Fig.2B ist das Feststellbremsbetätigungsorgan 37 bzw. die mechanische Kopplung 88 außer Eingriff mit dem Ventilglied 70 des pneumatischen Ventils 72 bzw. wird dieses Ventil 72 nicht betätigt, während im Zustand "Parken" das Feststellbremsbetätigungsorgan 37 bzw. die mechanische Kopplung 88 in Eingriff mit dem pneumatischen Ventil 72 gerät und dieses dann von der Sperrstellung in die Durchlassstellung schaltet. Diese Funktionalität ist unabhängig von einer Funktionstüchtigkeit des elektrischen Feststellbremskreises. Mit anderen Worten wird bei einem funktionstüchtigen elektrischen Feststellbremskreis der Steuereingang 20 des Relaisventils 18 einerseits von der Magnetventileinrichtung 8 des elektrischen Feststellbremskreises und andererseits in der Stellung "Parken" vom pneumatischen Ventil 72 des pneumatischen Feststellbremskreises gesteuert.

Falls nun die elektrische Stromversorgung ausfällt oder abgeschaltet wird ("Zündung aus") bzw. die elektronische Steuereinrichtung 14 ausfällt, so wird der elektrische Feststellbremskreis wirkungslos. Die Feststellbremse bzw. die Federspeicherbremszylinder 5 können dann aber durch das Feststellbremsbetätigungsorgan 37, mit welchem auch der elektrische Feststellbremskreis betätigt wird zugespannt werden. Hierzu wird das Feststellbremsbetätigungsorgan 37 in die Endstellung "Parken" betätigt, wodurch dieses die mechanische Kopplung 88 betätigt, welche wiederum in Eingriff mit dem pneumatischen Ventil 72 gerät, welches daraufhin von der Sperrstellung in seine Durchlassstellung schaltet, in welcher der an die Backup-Leitung 76 angeschlossene Ausgang 74 mit der Entlüftung 82 verbunden wird (Fig.2C). Über die Backup-Leitung 76, den Backup-Anschluss 84 und die interne Druckverbindung 86 wird dann der Steuereingang 20 des Relaisventils 18 entlüftet, wodurch auch der Arbeitsausgang 28 des Relaisventils 18 sowie der Anschluss 40 und die Federspeicherbremszylinder 5 entlüftet werden, wodurch die Feststellbremse zuspannt. Damit ist auch bei einem nicht intakten elektrischen Feststellbremskreis ein "Notzuspannen" der Feststellbremse über den redundanten pneumatischen Feststellbremskreis möglich.

Gemäß einer weiteren, hier nicht gezeigten Ausführungsform kann der Eingang 80 des pneumatischen Ventils 72 anstatt mit einer Entlüftung auch mit einem beliebigen Druckluftvorrat oder mit dem Druckluftvorrat 3 verbunden sein. Weiterhin können dann die mechanische Kopplung 88 und das pneumatische Ventil 72 derart ausgebildet und angeordnet sein, dass lediglich im Zustand "Fahren" des Feststellbremsbetätigungsorgans 37 das Feststellbremsbetätigungsorgan 37 bzw. die mechanische Kopplung 88 in Eingriff mit dem pneumatischen Ventil 72 bzw. mit dessen Ventilglied 70 gerät. Demgegenüber ist im Zustand "Parken" sowie in den Teilbremszuständen des Feststellbremsbetätigungsorgans 37 gemäß Fig.2B und Fig.2C das Feststellbremsbetätigungsorgan 37 bzw. die mechanische Kopplung 88 außer Eingriff mit dem pneumatischen Ventil 72 bzw. wird dieses Ventil 72 nicht betätigt.

Im Zustand "Fahren" hingegen schaltet dann das pneumatische Ventil 72 infolge des Eingriffs mit der mechanischen Kopplung 88 bzw. mit dem Feststellbremsbetätigungsorgan 37 von der Sperrstellung in die Durchlassstellung, in welcher der an die Backup-Leitung 76 angeschlossene Ausgang 74 mit dem Druckluftvorrat 3 verbunden wird. Über die Backup-Leitung 76, den Backup-Anschluss 84 und die interne Druckverbindung 86 wird dann der Steuereingang 20 des Relaisventils 18 belüftet, wodurch auch der Arbeitsausgang 28 des Relaisventils 18 sowie der Anschluss 40 und die Federspeicherbremszylinder 5 belüftet werden, wodurch die Feststellbremse löst. Damit ist auch bei einem nicht intakten elektrischen Feststellbremskreis ein "Notlösen" der Feststellbremse über den redundanten pneumatischen Feststellbremskreis möglich.

Bezugszeichenliste

| 1 | Feststellbremssteuereinrichtung |
| 2 | Vorratsanschluss |
| 3 | Druckluftvorrat |
| 4 | Rückschlagventil |
| 5 | Federspeicherbremszylinder |
| 6 | Vorratsleitung |
| 8 | Magnetventileinrichtung |
| 10 | erstes 2/2-Wegemagnetventil |
| 12 | zweites 2/2-Wegemagnetventil |
| 14 | Steuereinrichtung |
| 16 | Vorratseingang |
| 18 | Relaisventil |
| 20 | Steuereingang |
| 22 | Steuerleitung |
| 24 | Drucksenke |
| 26 | Rückkopplungsleitung |
| 28 | Arbeitsausgang |
| 30 | Drosselelement |
| 32 | Feststellbremssignalanschluss |
| 34 | Signalleitung |
| 36 | Feststellbremsbetätigungseinrichtung |
| 37 | Feststellbremsbetätigungsorgan |
| 38 | Arbeitsleitung |
| 39 | Feststellbremswertgeber |
| 40 | Anschluss für Federspeicherbremszylinder |
| 42 | Steuerkammer |
| 44 | Gehäuse |
| 46 | Relaiskolben |
| 48 | Ventilkörper |
| 50 | Auslasssitz |
| 52 | Manschette |
| 54 | Einlasssitz |
| 56 | Entlüftung |

| 58 | Arbeitskammer |
| 60 | Vorratskammer |
| 62 | Manschettenfeder |
| 64 | Relaiskolbenfeder |
| 66 | Federelement |
| 68 | Ventilsitz |
| 70 | Ventilglied |
| 72 | Ventil |
| 74 | Ausgang |
| 76 | Backup-Leitung |
| 80 | Eingang |
| 82 | Entlüftung |
| 84 | Backup-Anschluss |
| 86 | Druckverbindung |
| 88 | mechanische Kopplung |
| 90 | Schwenkachse |
| 92 | Gehäuse |
| 100 | Feststellbremseinrichtung |

**Patentansprüche**

1. Elektro-pneumatische Feststellbremseinrichtung (1) eines Kraftfahrzeugs, mit einem elektrisch steuerbaren Feststellbremskreis, welcher eine Feststellbremsbetätigungseinrichtung (36) aufweist, die wenigstens ein mit einem elektrischen Feststellbremswertgeber (39) zusammen wirkendes, vom Fahrer wenigstens in die Stellungen "Parken" und "Fahren" betätigbares Feststellbremsbetätigungsorgan (37) aufweist, sowie eine elektronische Steuereinrichtung (14), in welche der Feststellbremswertgeber (39) ein von einer Betätigung des Feststellbremsbetätigungsorgans (37) abhängiges Feststellbremssignal einsteuert, wobei die elektronische Steuereinrichtung (14) abhängig von dem Feststellbremssignal wenigstens ein Magnetventil (10, 12) einer Ventileinrichtung (8, 18) steuert, die mit wenigstens einem Federspeicherbremszylinder (5) als Feststellbremse verbunden ist, und mit einem als Redundanz vorgesehenen pneumatisch steuerbaren Feststellbremskreis, der wenigstens ein vom Fahrer betätigbares pneumatisches Ventil (72) aufweist, welches wenigstens ein pneumatisch steuerbares Ventil (18) der Ventileinrichtung (8, 18) pneumatisch steuert, **dadurch gekennzeichnet, dass** das wenigstens eine pneumatische Ventil (72) derart angeordnet und ausgebildet ist, dass es vom Feststellbremsbetätigungsorgan (37) mechanisch betätigbar ist und das wenigstens eine pneumatisch steuerbare Ventil (18) der Ventileinrichtung (8, 18) abhängig von einer Betätigung des Feststellbremsbetätigungsorgans (37) be- oder entlüftet.

2. Feststellbremseinrichtung nach Anspruch 1, **dadurch gekennzeichnet, dass** das wenigstens eine pneumatische Ventil (72) in die Feststellbremsbetätigungseinrichtung (36) baulich integriert ist.

3. Feststellbremseinrichtung nach Anspruch 1 oder 2, **dadurch gekennzeichnet, dass** das wenigstens eine pneumatisch steuerbare Ventil (18) der Ventileinrichtung (8, 18) ein Relaisventil ist, von welchem ein pneumatischer Steuereingang (20) einerseits mit einer elektropneumatischen, von der elektronischen Steuereinrichtung (14) gesteuerten Einlass-/Auslassventilkombination (10, 12) und andererseits mit dem wenigstens einen pneumatischen Ventil (72) verbunden ist, und von welchem ein Arbeitsausgang (28) mit dem wenigstens einen Federspeicherbremszylinder (5) verbunden ist.

4. Feststellbremseinrichtung nach einem der vorhergehenden Ansprüche, **dadurch gekennzeichnet, dass** das wenigstens eine pneumatische Ventil (72) ein 2/2-Wegeventil mit einer Sperrstellung und einer Durchlassstellung ist, wobei es in die Sperrstellung federbelastet ist und in der Durchlassstellung ein Eingang (80 mit einem Ausgang (74) verbunden und in der Sperrstellung diese Verbindung gesperrt ist.

5. Feststellbremseinrichtung nach einem der vorhergehenden Ansprüche, **dadurch gekennzeichnet, dass** ein Ausgang (74) des wenigstens einen pneumatischen Ventils (72) mit einem pneumatischen Steuereingang (20) des pneumatisch steuerbaren Ventils (18) der Ventileinrichtung (8, 18) und der Eingang des wenigstens einen pneumatischen Ventils (72) entweder mit einer Entlüftung (82) oder mit einem Druckluftvorrat (3) verbunden ist.

6. Feststellbremseinrichtung nach einem der vorhergehenden Ansprüche, **dadurch gekennzeichnet, dass** eine mechanische Kopplung (88) zwischen dem wenigstens einen pneumatischen Ventil (72) und dem Feststellbremsbetätigungsorgan (37) derart angeordnet und ausgebildet ist, dass lediglich in der Stellung "Parken" des Feststellbremsbetätigungsorgans (37) das wenigstens eine pneumatisch steuerbare Ventil (18) der Ventileinrichtung zum redundanten Zuspannen des wenigstens einen Federspeicherbremszylinders (5) gesteuert wird.

7. Feststellbremseinrichtung nach einem der Ansprüche 1 bis 5, **dadurch gekennzeichnet, dass** eine mechanische Kopplung (88) zwischen dem wenigstens einen pneumatischen Ventil (72) und dem Feststellbremsbetätigungsorgan (37) derart angeordnet und ausgebildet ist, dass lediglich in der Stellung "Fahren" des Feststellbremsbetätigungsorgans (37) das wenigstens eine pneumatisch steuerbare Ventil (18) der Ventileinrichtung (8, 18) zum redundanten Lösen des wenigstens einen Federspeicherbremszylinders (5) gesteuert wird.

8. Feststellbremseinrichtung nach einem der vorhergehenden Ansprüche, **dadurch gekennzeichnet, dass** das wenigstens eine pneumatische Ventil (72) ein Sitzventil oder ein Schieberventil ist.

9. Fahrzeug, insbesondere zum Ziehen eines Anhängers ausgebildetes Zugfahrzeug, mit einer Feststellbremseinrichtung (1) nach einem der vorhergehenden Ansprüche.

**Claims**

1. Electro-pneumatic parking brake device (1) of a motor vehicle, having an electrically controllable parking brake circuit which has a parking brake actuating device (36) which has at least one parking brake actuating member (37) which interacts with an electric parking brake transducer (39) and can be actuated by the driver at least into the "Park" and "Drive" positions, and an electronic control device (14), into which the parking brake transducer (39) inputs a parking brake signal which is dependent on an actuation of the parking brake actuating member (37), the electronic control device (14) controlling at least one solenoid valve (10, 12) of a valve device (8, 18) in a manner which is dependent on the parking brake signal, which valve device (8, 18) is connected to at least one spring brake cylinder (5) as a parking brake, and having a pneumatically controllable parking brake circuit which is provided as a redundancy and has at least one pneumatic valve (72) which can be actuated by the driver and pneumatically controls at least one pneumatically controllable valve (18) of the valve device (8, 18), **characterised in that** the at least one pneumatic valve (72) is arranged and configured in such a way that it can be actuated mechanically by the parking brake actuating member (37) and ventilates or vents the at least one pneumatically controllable valve (18) of the valve device (8, 18) in a manner which is dependent on an actuation of the parking brake actuating member (37)

2. Parking brake device according to claim 1, **characterised in that** the at least one pneumatic valve (72) is integrated structurally into the parking brake actuating device (36).

3. Parking brake device according to claim 1 or 2, **characterised in that** the at least one pneumatically controllable valve (18) of the valve device (8, 18) is a relay valve, by which a pneumatic control input (20) is connected firstly to an electro-pneumatic inlet/outlet valve combination (10, 12) which is controlled by the electronic control device (14), and secondly to the at least one pneumatic valve (72), and by which relay valve an operating output (28) is connected to the at least one spring brake cylinder (5).

4. Parking brake device according to any of the preceding claims, **characterised in that** the at least one pneumatic valve (72) is a 2/2-way valve with a shut-off position and a passage position, said pneumatic valve (72) being spring-loaded into the shut-off position, and an input (80) being connected to an output (74) in the passage position, and said connection being shut off in the shut-off position.

5. Parking brake device according to any of the preceding claims, **characterised in that** an output (74) of the at least one pneumatic valve (72) is connected to a pneumatic control input (20) of the pneumatically controllable valve (18) of the valve device (8, 18), and the input of the at least one pneumatic valve (72) is connected either to a venting means (82) or to a compressed air supply (3).

6. Parking brake device according to any of the preceding claims, **characterised in that** a mechanical coupling (88) is arranged and configured between the at least one pneumatic valve (72) and the parking brake actuating member (37) in such a way that the at least one pneumatically controllable valve (18) of the valve device is controlled for applying the at least one spring brake cylinder (5) in a redundant manner only in the "Park" position of the parking brake actuating member (37).

7.  Parking brake device according to any of claims 1 to 5, **characterised in that** a mechanical coupling (88) is arranged and configured between the at least one pneumatic valve (72) and the parking brake actuating member (37) in such a way that the at least one pneumatically controllable valve (18) of the valve device (8, 18) is controlled for releasing the at least one spring brake cylinder (5) in a redundant manner only in the "Drive" position of the parking brake actuating member (37).

8.  Parking brake device according to any of the preceding claims, **characterised in that** the at least one pneumatic valve (72) is a seat valve or a slide valve.

9.  Vehicle, in particular a traction vehicle configured for towing a trailer, having a parking brake device (1) according to any of the preceding claims.

**Revendications**

1.  Dispositif (1) électropneumatique de frein de stationnement d'un véhicule automobile, comprenant un circuit de frein de stationnement pouvant être commandé électriquement, qui a un dispositif (36) d'actionnement de frein de stationnement ayant au moins un organe (37) d'actionnement de frein de stationnement coopérant avec un indicateur (39) électrique de valeur de frein de stationnement et pouvant être mis par le conducteur au moins dans la position "stationnement" et "marche", ainsi qu'un dispositif (14) électronique de commande, dans lequel l'indicateur (39) de valeur de frein de stationnement envoie un signal de frein de stationnement dépendant d'un actionnement de l'organe (37) d'actionnement du frein de stationnement, dans lequel le dispositif (14) électronique de commande commande, en fonction du signal de frein de stationnement, au moins une électrovanne (10, 12) d'un dispositif (8, 18) de vanne, qui est relié à au moins un cylindre (5) de frein à ressort accumulateur comme frein de stationnement, et comprenant un circuit de frein de stationnement prévu en redondance, pouvant être commandé pneumatiquement et ayant au moins une vanne (72) pneumatique pouvant être actionnée par le conducteur, vanne qui commande pneumatiquement au moins une vanne (18) pouvant être commandée pneumatiquement du dispositif (8, 18) de vanne, **caractérisé en ce que** la au moins une vanne (72) pneumatique est disposée et constituée de manière à pouvoir être actionnée mécaniquement par l'organe (37) d'actionnement de frein de stationnement et la au moins une vanne (8) pouvant être commandée pneumatiquement du dispositif (8, 18) de vanne est alimentée en air ou purgée en fonction d'un actionnement de l'organe (37) d'actionnement du frein de stationnement.

2.  Dispositif de frein de stationnement suivant la revendication 1, **caractérisé en ce que** la au moins une vanne (72) pneumatique est intégrée de construction dans le dispositif (36) d'actionnement du frein de stationnement.

3.  Dispositif de frein de stationnement suivant la revendication 1 ou 2, **caractérisé en ce que** la au moins une vanne (18), pouvant être commandée pneumatiquement du dispositif (8, 18) de vanne est une vanne relais, par laquelle une entrée (20) pneumatique de commande est reliée, d'une part, à une combinaison (10, 12) de vanne d'entrée/sortie électropneumatique et commandée par le dispositif (14) électronique de commande, et d'autre part, à la au moins une vanne (72) pneumatique, et par laquelle une sortie (28) de travail est reliée au au moins un cylindre (5) de frein à ressort accumulateur.

4.  Dispositif de frein de stationnement suivant l'une des revendications précédentes, **caractérisé en ce que** la au moins une vanne (72) pneumatique est une vanne à 2/2 voies ayant une position d'arrêt et une position de passage, dans lequel, dans la position d'arrêt, elle est soumise à l'action d'un ressort et, dans la position de passage, une entrée (80) est reliée à une sortie (74) et, dans la position d'arrêt, cette liaison est bloquée.

5.  Dispositif de frein de stationnement suivant l'une des revendications précédentes, **caractérisé en ce qu'**une sortie (74) de la au moins une vanne (72) pneumatique est reliée à une entrée (20) pneumatique de commande de la vanne (18) pouvant être commandée pneumatiquement du dispositif (8, 18) de vanne et l'entrée de la au moins une vanne (72) pneumatique est reliée, soit à une purge (82), soit à un réservoir (3) d'air comprimé.

6.  Dispositif de frein de stationnement suivant l'une des revendications précédentes, **caractérisé en ce qu'**un accouplement (88) mécanique, entre la au moins une vanne (72) pneumatique et l'organe (37) d'actionnement du frein de stationnement, est disposé et constitué de manière à commander, seulement dans la position "stationnement" de l'organe (37) d'actionnement du frein de stationnement, la au moins une vanne (18) pouvant être commandée pneumatiquement du dispositif de vanne pour le serrage redondant du au moins un cylindre (5) de frein à ressort accumulateur.

7. Dispositif de frein de stationnement suivant l'une des revendications 1 à 5, **caractérisé en ce qu'**un accouplement (88) mécanique, entre la au moins une vanne (72) pneumatique et l'organe (37) d'actionnement du frein de stationnement, est disposé et constitué, de manière à commander, seulement dans la position "marche" de l'organe (37) d'actionnement de frein de stationnement, la au moins une vanne (88) pouvant être commandée pneumatiquement du dispositif (8, 18) de vanne pour le desserrage de manière redondante du au moins un cylindre (5) de frein à ressort accumulateur.

8. Dispositif de frein de stationnement suivant l'une des revendications précédentes, **caractérisé en ce que** la au moins une vanne (72) pneumatique est une vanne à siège ou une vanne à tiroir.

9. Véhicule, notamment véhicule de traction constitué pour tirer une remorque, comprenant un dispositif (1) de frein de stationnement suivant l'une des revendications précédentes.

FIG.1

FIG.2A

FIG.2B

FIG.2C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1571061 A1